# EUROPÄISCHE PATENTANMELDUNG

(11) **EP 3 572 732 A1**
(43) Veröffentlichungstag der Anmeldung: **27.11.2019**
(21) Anmeldenummer: 18174262.8
(22) Anmeldetag: 25.05.2018
(51) Int. Cl.: F24D 3/18, F24D 5/02, F24D 9/00, F24D 19/10, F24F 5/00, F24F 12/00

(54) **WÄRMEPUMPENHEIZVORRICHTUNG ZUM HEIZEN EINES GEBÄUDES ODER EINES BRAUCHWASSERSPEICHERS**

(71) Anmelder: Weider Wärmepumpen GmbH, 6971 Hard bei Bregenz (AT)
(72) Erfinder: BRUCKNER, Niklas, 3281 Oberndorf/Melk (AT)
(74) Vertreter: Otten, Roth, Dobler & Partner mbB Patentanwälte

(57) **Zusammenfassung**

Es wird eine Wärmepumpenheizvorrichtung zum Heizen eines Gebäudes und/oder eines Brauchwasserspeichers (7) mit einer Wärmepumpe (4), wobei ein Wärmequellenkreislauf (3) wenigstens die Wärmepumpe (4) und einen Wärmequellen-Wärmetauscher (5) zum Nutzen von Wärmeenergie einer Wärmequelle, insbesondere eines Erdkörpers oder dergleichen, sowie eine Pumpe (15) zum Pumpen und/oder Umwälzen eines Wärmequellenfluids, insbesondere einer Sole, umfasst, wobei ein Heizkreislauf (6) wenigstens die Wärmepumpe (4) und einen von einem Heizfluid, insbesondere einem Heizwasser, durchströmbaren Heizkörper (7), insbesondere Flächenheizkörper und/oder Radiator, und/oder den Brauchwasserspeicher (7) sowie eine Heizpumpe zum Pumpen und/oder Umwälzen des Heizfluids umfasst, wobei eine Lüftungsanlage (26) wenigstens eine Wärmetauschereinheit (9 zur Wärmeübertragung zwischen einem aus dem Gebäude ausströmenden, ersten Luftstrom (10, 13) und einem in das Gebäude einströmenden, zweiten Luftstrom (8, 12) aufweist, wobei der Wärmequellenkreislauf (3) wenigstens einen ersten, von dem Wärmequellenfluid durchströmbaren Luft-Wärmetauscher (1) zur Wärmeübertragung zwischen einem der Luftströme (8, 10, 12, 13) der Lüftungsanlage (26) und dem Wärmequellenfluid aufweist, vorgeschlagen, die die Nachteile des Stands der Technik wenigstens teilweise verbessert, insbesondere bei tiefen (Außen-) Temperaturen und/oder die Nutzbarkeit der Wärmequelle verbessert. Dies wird erfindungsgemäß dadurch erreicht, dass der Wärmequellenkreislauf (3) wenigstens einen zweiten, von dem Wärmequellenfluid durchströmbaren Luft-Wärmetauscher (2) zur Wärmeübertragung zwischen einem der Luftströme (8, 10, 12, 13) der Lüftungsanlage (26) und dem Wärmequellenfluid aufweist.

## Beschreibung

Die Erfindung betrifft eine Wärmepumpenheizvorrichtung zum Heizen eines Gebäudes und/oder eines Brauchwasserspeichers mit einer Wärmepumpe, wobei ein Wärmequellenkreislauf wenigstens die Wärmepumpe und einen Wärmequellen-Wärmetauscher zum Nutzen von Wärmeenergie einer Wärmequelle, insbesondere eines Erdkörpers oder dergleichen, sowie eine Pumpe zum Pumpen und/oder Umwälzen eines Wärmequellenfluids, insbesondere einer Sole, umfasst, nach dem Oberbegriff des Anspruchs 1.

### Stand der Technik

Eine Wärmepumpenheizung entzieht der Umwelt Wärme, z.B. der umgebenden Luft, Grund-, Oberflächen-, Abwasser oder Erdreich, und hebt diese Wärme mittels einer Wärmepumpe auf ein verwertbares höheres Temperaturniveau an, um damit Gebäude oder andere Einrichtungen bzw. Brauchwasser beheizen zu können.

Die Wärmepumpe entzieht der Umwelt bzw. einem Reservoir Wärme und kühlt somit die Wärmequelle. Die Effizienz der Wärmepumpe - ausgedrückt in der Leistungszahl - sinkt allerdings umso mehr, je geringer die Temperatur der Quelle ist. Das bedeutet, dass der Einsatz der Wärmepumpe umso effizienter ist, je geringer die gewünschte Temperaturdifferenz zwischen dem Wärmereservoir, zum Beispiel ca. 10°C Erdtemperatur, und der "VorlaufTemperatur" des Gebäude-Heizsystems ist.

Vielfach im Einsatz sind Erdwärmetauscher als Erdwärmekollektoren, die in geringer Tiefe von ca. 1 bis 1,5 m im Erdboden (im Wesentlichen horizontal) verlegte "Heizschlangen" sind. Die Wärme wird im Wesentlichen durch versickerndes Regenwasser oder durchströmendes Grundwasser eingetragen. Die Entzugsleistung hängt sehr von oberflächlichen Gegebenheiten ab, wie zum Beispiel Sonneneinstrahlung, Regen, Frost, etc. Nachteilig ist hierbei, dass bei lange anhaltendem Wärmeentzug sich um die Schlangen eine Eisschicht, eine Art Permafrost, bildet kann. Eis ist eine Isolierschicht und verschlechtert den Wärmeübergang deutlich.

Darüber hinaus sind Erdwärmesonden als Erdwärmetauscher gebräuchlich. Hierbei werden im Wesentlichen vertikale Bohrungen in den Boden bis zu mehreren 100 Metern eingebracht. Reicht die Leistung einer Erdwärmesonde nicht aus, werden mehrere Bohrungen vorgesehen. Nachteilig sind die hohen Kosten für die tiefen Bohrungen.

Zudem sind auch Wärmepumpen im Einsatz, die z.B. einem Eisspeicher bzw. Wasserspeicher die Wärme entzieht. So können auch sog. "Saisonalspeicher" als Wärmereservoir verwendet werden.

Entsprechende Wärmepumpenheizungen werden vielfach in sog. Passivhäusern oder Niedrigenergiehäusern eingesetzt. Diese Gebäude weisen üblicherweise auch aktive, zentrale/dezentrale Lüftungssysteme eingesetzt. Gerade zentrale Lüftungsanlagen weisen einen sog. Kreuzwärmetauscher bzw. Kreuzgegenstrom-Wärmetauscher und/oder Plattenwärmetauscher auf, womit die eingesaugte (kalte) Außenluft von der abgesaugten (warmen) Innenluft bzw. Abluft erwärmt wird. Diese dient zur Energierückgewinnung und somit zur Verbesserung der Energieeffizienz des Gebäudes.

Es sind bereits Wärmepumpenheizungen bekannt, die mit aktiven Lüftungssysteme kombiniert bzw. verbunden werden. Dies dient der weiteren Optimierung der Energieeffizienz, wobei meist die Energierückgewinnung/-nutzung verbessert bzw. die Erhöhung der Leistungszahl der Wärmepumpe angestrebt wird. Die DE 10 2004 039 569 A1 betrifft ein derartiges System, wobei der Wärmequellenkreislauf über einen Wärmetauscher mit dem aktiven Lüftungssystem verbunden ist, um die Leistungszahl der Wärmepumpe zu erhöhen.

### Aufgabe und Vorteile der Erfindung

Aufgabe der Erfindung ist es demgegenüber, eine Wärmepumpenheizvorrichtung zum Heizen eines Gebäudes und/oder eines Brauchwasserspeichers mit einer Wärmepumpe der eingangs genannten Art vorzuschlagen, die die Nachteile des Stands der Technik wenigstens teilweise verbessert, insbesondere bei tiefen (Außen-)Temperaturen und/oder die Nutzbarkeit der Wärmequelle verbessert.

Diese Aufgabe wird, ausgehend von einer Wärmepumpenheizvorrichtung der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Wärmepumpenheizvorrichtung dadurch aus, dass der Wärmequellenkreislauf wenigstens einen zweiten, von dem Wärmequellenfluid durchströmbaren Luft-Wärmetauscher zur Wärmeübertragung zwischen einem der Luftströme der Lüftungsanlage und dem Wärmequellenfluid aufweist.

Mit Hilfe dieser Maßnahme wird erreicht, dass die Wärmepumpenheizvorrichtung an unterschiedlichste Betriebsmodi wie z.B. Sommer-, Winterbetrieb oder an die wechselnde Übergangszeit als auch an den Heizbetrieb sowie an einen Kühlbetrieb zum Kühlen des Gebäudes, insb. mittels der Lüftungsanlage, etc. anpassbar ist. So kann mit Hilfe der Erfindung bzw. des zweiten Luft-Wärmetauscher eine neuartige bzw. mehrfache Kombination der Lüftungsanlage und der Wärmepumpe bzw. des Wärmepumpenkreislaufs realisiert werden. Dies ermöglicht ein verbessertes bzw. flexibleres Energiemanagement des Gebäudes, was zur Steigerung der Energierückgewinnung bzw. der Energieeffizienz führt. Hierdurch können auch einzelne Komponenten entsprechend kleiner dimensioniert und somit wirtschaftlicher ausgeführt werden.

Im Sinn der Erfindung ist die Wärmepumpe in bekannter Weise eine Einheit, die im Wesentlichen einen üblicherweise vollständig geschlossenen, ein Wärmepumpenfluid umfassenden Wärmepumpenkreislauf auf, der unter anderem einen Verdampfer zum Verdampfen des Wärmepumpenfluids und einen Verdichter bzw. eine Pumpe zum Druckbeaufschlagen des Wärmepumpenfluids und einen Verflüssiger bzw. Kondensator zum Verflüssigen/Kondensieren des Wärmepumpenfluids sowie ein Expansionsventil oder dergleichen umfasst. Der Verflüssiger bzw. Kondensator ist als erster Wärmepumpen-Wärmetauscher ausgebildet, der zum Abführen der Heizenergie/-wärme mittels des Heizfluids, insb. Brauchwasser und/oder Heizungswasser, vorgesehen ist. Der Verdampfer ist als zweiter Wärmepumpen-Wärmetauscher ausgebildet, der zum Zuführen bzw. Nutzen der Wärmequelle bzw. Energie der Wärmequelle mittels des Wärmequellenfluids, insb. einer Sole aus Wasser und Glykol und/oder Salz, vorgesehen ist.

Vorteilhafterweise ist der erste Luft-Wärmetauscher als Fortluft-Wärmetauscher ausgebildet ist, wobei der Fortluft-Wärmetauscher in Strömungsrichtung des aus dem Gebäude ausströmenden, ersten Luftstroms betrachtet nach/hinter der Wärmetauschereinheit angeordnet ist, und/oder dass der zweite Luft-Wärmetauscher als Außenluft-Wärmetauscher ausgebildet, wobei der Außenluft-Wärmetauscher in Strömungsrichtung des in das Gebäude einströmenden, zweiten Luftstroms betrachtet vor der Wärmetauschereinheit angeordnet ist. Hiermit kann eine deutliche Verbesserung der Energierückgewinnung erreicht werden und damit eine Effizienzsteigerung des gesamten Systems. Auch eine besonders flexible bzw. vorteilhafte Verknüpfung bzw. Kombination des Wärmepumpenkreislaufs mit der Lüftung kann hiermit verwirklicht werden.

Dementsprechend ermöglicht vor allem der Fortluft-Wärmetauscher eine zur Wärmetauschereinheit bzw. zum Kreuzwärmetauscher zusätzliche Energierückgewinnung von der aus dem Gebäude ausströmenden Fortluft, die ansonsten ungenützt in die Atmosphäre entweichen würde. So kann der Wärmequellenkreislauf durch diese zusätzlich im System gehaltene Energie bzw. Energiemenge in vorteilhafter Weise erwärmt und somit die Effizienz der Wärmepumpe bzw. deren Leistungszahl verbessert werden. Dies kann bei üblichen Betriebsbedingungen durchaus einen erheblichen Energiegewinn bedeuten, was z.B. gerade bei modernen Niedrigenergie- oder Passivhäusern von wesentlicher Bedeutung bzgl. Warmwasserbereitung und/oder Gebäudeheizung ist.

Mit dem Außenluft-Wärmetauscher kann in vorteilhafter Weise einerseits eine Erwärmung der einströmenden Außenluft vor der Wärmetauschereinheit realisiert werden. Dies ist gerade bei sehr niederen Außentemperaturen von unter null Grad, insb. bei etwa -10°C und weniger, von große Bedeutung. Denn hiermit kann u.a. ein Vereisen der Wärmetauschereinheit und somit die hiermit einhergehende Leistungsverringerung der Wärmetauschereinheit wirkungsvoll im Winter verhindert werden.

Andererseits kann mit dem vorteilhaften Außenluft-Wärmetauscher bei höheren Außentemperaturen, insb. bei über ca. 5°C oder sogar bei über 15°C, bzw. im Sommer und ggf. den sog. Übergangszeiten in vorteilhafter Weise Wärme aus der Außenluft dem Wärmequellenkreislauf zur Verfügung gestellt werden. Das bedeutet, dass entsprechend wie oben in Bezug zum Fortluft-Wärmetauscher durch diese zusätzliche dem gesamten System zur Verfügung gestellte bzw. nutzbare Energie bzw. Energiemenge der Wärmequellenkreislauf in vorteilhafter Weise erwärmt und somit die Effizienz der Wärmepumpe bzw. deren Leistungszahl verbessert werden kann. Folglich ist v.a. in diesem Betriebsfall die Kombination der beiden Luft-Wärmetauscher gemäß der Erfindung von besonderem energetischem Vorteil, was auch die Wirtschaftlichkeit der Erfindung weiter verbessert.

In einer besonderen Weiterbildung der Erfindung umfasst der Wärmequellenkreislauf wenigstens ein von dem Wärmequellenfluid durchströmbares Verbindungselement zum Verbinden des ersten Luft-Wärmetauschers mit dem zweiten Luft-Wärmetauscher. Hiermit kann eine vorteilhafte direkte, strömungstechnische Verbindung bzw. Verknüpfung der beiden Luft-Wärmetauscher verwirklicht werden, d.h. das Wärmequellenfluid strömt, insbesondere direkt/unmittelbar und benachbart bzw. hintereinander, von einem zum anderen Luft-Wärmetauscher.

Vorteilhafterweise sind der erste und der zweite Luft-Wärmetauscher in Reihe verschaltet bzw. miteinander verbunden. Dementsprechend kann zum Beispiel bei besonderen Betriebsbedingungen eine mehr- bzw. zweistufige Temperarturerhöhung der Temperatur des Wärmequellenfluids verwirklicht werden. Dies wird gemäß der Erfindung vorzugsweise dadurch umgesetzt, dass im Wärmequellenkreislauf der erste Luft-Wärmetauscher in Strömungsrichtung des Wärmequellenfluids betrachtet vor dem zweiten Luft-Wärmetauscher angeordnet ist. Das bedeutet u.a., dass bei dieser Ausführungsform der Erfindung der/die Luft-Wärmetauscher vor dem Verdampfer der Wärmepumpe in den Wärmequellenkreislauf integriert bzw. eingebunden werden.

Es ist möglich, dass der/die erste und/oder zweite Luft-Wärmetauscher im Wärmequellenkreislauf bzw. in Strömungsrichtung des Wärmequellenfluids betrachtet (direkt/unmittelbar) vor der Wärmepumpe und/oder einer Ausströmöffnung der Wärmepumpe angeordnet ist/sind, insb. hinter/nach dem Wärmequellen-Wärmetauscher bzw. der Erdsonde bzw. dem Erdkollektor. Entsprechend werden die oben genannten "Energiegewinne" für den Wärmequellenkreislauf und somit die Temperaturanhebung des Wärmequellenfluids direkt der Wärmepumpe zur Verfügung gestellt. Dies verbessert die Betriebsweise bzw. Effizienz der Wärmepumpe und somit auch die Wirtschaftlichkeit der erfindungsgemäßen Wärmepumpenheizvorrichtung.

In einer bevorzugten Variante der Erfindung ist/sind im Wärmequellenkreislauf der erste Luft-Wärmetauscher und/oder der zweite Luft-Wärmetauscher in Strömungsrichtung des Wärmequellenfluids betrachtet nach/hinter der Wärmepumpe und/oder einer Ausströmöffnung der Wärmepumpe angeordnet. Alternativ oder in Kombination hierzu ist/sind im Wärmequellenkreislauf der erste Luft-Wärmetauscher und/oder der zweite Luft-Wärmetauscher in Strömungsrichtung des Wärmequellenfluids betrachtet vor dem Wärmequellen-Wärmetauscher angeordnet. Das bedeutet u.a., dass bei diesen vorteilhaften Varianten der Erfindung der/die Luft-Wärmetauscher nach/hinter dem Verdampfer der Wärmepumpe in den Wärmequellenkreislauf integriert bzw. eingebunden werden. Hiermit kann z.B. die vergleichsweise tiefe Temperatur des Wärmequellenfluids im Wärmequellenkreislauf nach der Wärmepumpe bzw. dem Verdampfer in vorteilhafte Weise besonders hoch und/oder beispielsweise auch durch die im Winter bzw. tieferen Außentemperaturen relativ geringen/tiefen Temperaturen des Außenluft-Wärmetauschers noch/bereits etwas angehoben/erwärmt werden. Dies steigert unter anderem die o.g. Einsetzbarkeit des Außenluft-Wärmetauschers zur Energiegewinnung für die Wärmepumpe. Gegebenenfalls kann der Fortluft-Wärmetauscher mit etwas höherem Temperaturniveau des Wärmequellenfluids als der Außenluft-Wärmetauscher nach/hinter dem Außenluft-Wärmetauscher in den Wärmequellenkreislauf integriert bzw. eingebunden werden. Dies kann einerseits mittels einer vorteilhaften Parallelschaltung der beiden Luft-Wärmetauscher und/oder mit einer entsprechenden Anordnung in Reihe der der beiden Luft-Wärmetauscher verwirklicht werden. Letzteres zum Beispiel in einem Bypass-Kreis des Wärmequellenkreislaufs.

Darüber hinaus wird durch den realisierbaren Energieeintrag bzw. Energiegewinn mittels dem/den ersten/zweiten Luft-Wärmetauschern in den Wärmequellenkreislauf bzw. die Temperaturanhebung des Wärmequellenfluids in vorteilhafter Weise erreicht, dass im Vergleich zum Stand der Technik der Wärmequellen-Wärmetauscher bzw. die sog. Erdsonde oder der Flächenkollektor auch bei ungünstigen Betriebsbedingungen nicht oder zumindest weniger vereist.

Vielmehr wird sogar mit Hilfe der Erfindung erreicht, dass eine Vereisung bzw. ein sog. "Permafrost"-Bereich um/an dem Wärmequellen-Wärmetauscher bzw. der Erdsonde erwärmt und aufgetaut wird. Dies verbessert in entscheidender Weise den Wärmeübergang zwischen Wärmequellen-Wärmetauscher bzw. der Erdsonde und dessen/deren Umgebung, d.h. der Energiequelle. Dementsprechend kann im Vergleich zum Stand der Technik eine deutliche Kleinerung bzw. Reduktion der Dimensionierung des Wärmequellen-Wärmetauschers bzw. der Erdsonde erreicht werden. Dies hat erhebliche positive Auswirkung auf die Wirtschaftlichkeit bzw. die Herstellung des Wärmequellen-Wärmetauschers bzw. der Erdsonde sowie zum Teil auch auf die benötigte Grundstücksgröße für die kleinere Erdsonde bzw. des Erdkollektors.

Grundsätzlich ist festzustellen, dass gemäß der Erfindung eine Verwendung von Energie der Lüftungsanlage dafür verwendet werden kann, dass der Wärmequellen-Wärmetauscher bzw. die Erdsonde bzw. der Erdkollektor erwärmt wird. Das heißt, dass in vorteilhafter Weise der Lüftungsanlage Energie entnommen wird und zur Enteisung/Erwärmung des Wärmequellen-Wärmetauschers bzw. der Erdsonde bzw. des Erdkollektors verwendbar ist. Dies ist eine Abkehr bisheriger Maßnahmen bei Lüftungsanlagen bzw. Heizsystemen, die auf eine Energierückgewinnung abzielen. Gemäß der Erfindung wird jedoch im Gegensatz hierzu Energie der Lüftungsanlage zum Erwärmen der Energiequelle in bestimmten Betriebsbedingungen verwendet, d.h. Energie wird an die Umgebung bzw. die Energiequelle ab-/zurückgegeben, was auf den ersten Blick quasi eine "Energieverschwendung" im bisherigen Sinn bedeutet.

Es hat sich jedoch gezeigt, dass gerade im Winterbetrieb und auch z.T. in sog. Übergangszeiten eine relativ langandauernde Energieentnahme aus der Energiequelle bzw. dem Erdreich zu einer Vereisung bzw. einem Parmafrostbereich führt, der sich immer mehr um den Wärmequellen-Wärmetauscher bzw. die Erdsonde bzw. der Erdkollektor bildet bzw. "wächst" und eine nachteilige thermische Isolation ist. Gemäß der Erfindung kann vor allem in sog. Übergangszeiten, z.B. bei vergleichsweise großen Temperaturschwankungen im Tagesverlauf, aber auch bereits z.T. im Winterbetrieb, durch den erfindungsgemäßen Energieeintrag für/zur Energiequelle bzw. ins Erdreich, diese Vereisung bzw. der Parmafrostbereich am Wärmequellen-Wärmetauscher bzw. die Erdsonde bzw. der Erdkollektor beseitigen bzw. zumindest deutlich reduzieren, d.h. auftauen. Hierbei zeigen erste Berechnungen, dass teilweise nur wenige Stunden am Tag mit entsprechend vorteilhafter Erwärmung, z.B. Außentemperatur von über ca. 0°C, reichen, um gemäß der Erfindung ein Auftauen an/um den Wärmequellen-Wärmetauscher bzw. die Erdsonde zu erreichen. Dies verbessert die Effizienz der Wärmepumpe bzw. des Wärmequellenkreislauf in erheblichem Maß und liegt vielfach deutlich über dem (damit verbundenen) "Energieverlust" der Lüftungsanlage bzw. des Lüftungssystems.

Möglicherweise ist/sind der erste und/oder zweite Luft-Wärmetauscher vollständig in den Wärmequellenkreislauf eingebunden/integriert, d.h. der komplette Wärmequellenfluidstrom strömt durch diese Wärmetauscher. Entsprechend werden bei dieser Variante der/die erste und/oder zweite Luft-Wärmetauscher in einer Reihenschaltung zur Wärmepumpe und/oder zum Wärmequellen-Wärmetauscher bzw. zur Erdsonde angeordnet bzw. verschaltet/eingebunden. Hierzu müssen jedoch diese vergleichsweise groß dimensioniert werden.

Vorzugsweise ist (deshalb) wenigstens eine (zwei) Abzweigstelle und/oder ein Luft-Wärmetauscher-Parallelkreis und/oder ein Bypass vorgesehen, so dass (bei Bedarf bzw. je nach Betriebsmodus/-bedingungen) ein Teilstrom durch den/die erste und/oder zweite Luft-Wärmetauscher strömen kann. Ein Hauptstrom strömt/zirkuliert in vorteilhafter Weise direkt zum bzw. zwischen Wärmequellen-Wärmetauscher/Erdsonde und Wärmepumpe. Mit dieser/diesen Abzweigstellen bzw. dem Bypass/Parallelkreis kann somit eine vom Hauptstrom bzw. Gesamtstrom unabhängige Dimensionierung bzw. Regelung der Menge des durch den/die erste und/oder zweite Luft-Wärmetauscher strömenden Wärmequellenfluidstroms verwirklicht werden. Dies ist energetisch und wirtschaftlich als auch aus Platzgründen von Vorteil. Der/die erste/zweite Luft-Wärmetauscher können entsprechend kleiner und kostengünstiger ausgelegt/dimensioniert werden.

Vorteilhafterweise umfasst der Wärmequellenkreislauf wenigstens ein Stellglied zum Kontrollieren des Wärmequellenfluids. Hiermit kann eine vorteilhafte Regelung/Steuerung des durch den/die erste/zweite Luft-Wärmetauscher strömende Wärmequellenfluidstrom bzw. dessen Menge pro Zeiteinheit verwirklicht werden. Beispielsweise ist das Stellglied als Regelventil und/oder Weiche ausgebildet. Vorzugsweise sind wenigstens zwei Stellglieder/Ventile vorgesehen, so dass jeder der beiden Luft-Wärmetauscher bzw. deren Wärmequellen-Fluidteilstrom separat kontrollierbar bzw. einstellbar ist. Dies erhöht die Flexibilität des erfindungsgemäßen Systems.

Alternativ oder in Kombination zur zuvor genannten Variante gemäß der Erfindung ist in vorteilhafter Weise das Stellglied derart ausgebildet, dass der erste Luft-Wärmetauscher und/oder zweite Luft-Wärmetauscher von einem Teilstrom des Wärmequellenfluids strömbar ist/sind und/oder dass ein Teil, insbesondere der nicht durch den ersten und/oder zweiten Luft-Wärmetauscher strömende Teilstrom nach Durchströmen der Wärmepumpe, unmittelbar zum Wärmequellenwärmetauscher strömt.

Beispielsweise ist der Wärmequellenkreislauf derart ausgebildet, dass jeder Luft-Wärmetauscher und/oder der Wärmequellen-Wärmetauscher bzw. die Erdsonde jeweils separat bzw. unabhängig voneinander kontrollierbar bzw. vom Wärmequellenfluid durchströmbar und somit in Betrieb, in Teilbetrieb bzw. außer Betrieb gesetzt werden kann.

Auch kann der Wärmequellenkreislauf wenigstens ein Stellglied bzw. Regelelement zum Einstellen einer maximalen bzw. definierten Wärmequellenfluidmenge pro Zeiteinheit umfassen.

In einer vorteilhaften Ausführungsform der Erfindung umfasst der Heizkreislauf wenigstens einen dritten Luft-Wärmetauscher zur Wärmeübertragung zwischen dem in das Gebäude einströmenden, zweiten Luftstrom der Lüftungsanlage und dem Heizfluid. Hiermit kann beispielsweise eine vorteilhafte Nachheizung bzw. Zusatzheizung, d.h. eine weitere Temperaturerhöhung beim in das Gebäude strömenden Luftstrom erreicht. Dies kann gerade in sog. Übergangszeiten von großem Vorteil sein.

In vorteilhafter Weise ist mittels der Erfindung erreichbar, dass ein vorteilhafter Temperaturglättungseffekt beim Wärmequellen-Wärmetauscher/Erdkollektor bzw. bei der Erdsonde verwirklicht werden kann. Dies ist von wesentlichem Vorteil, den Wärmequellen-Wärmetauscher/Erdkollektor bzw. die Erdsonde effizienter betreiben zu können, insbesondere um eine nachteilige Eisbildung bzw. Bildung eines sog. Permafrostbereiches an/um diesen zu verhindern oder zumindest zu reduzieren.

Es zeigen erste Berechnungen/Simulationen, dass sogar ein Auftauen dieses "Eismantels" bzw. Permafrostbereiches realisierbar ist, sogar bei kalten Außenbedingungen bzw. im Winter und erst recht in Übergangszeiten. Hierbei genügen Wetterwechsel von einem Tag auf den anderen Tag und/oder sogar nur (größere) Temperaturschwankungen im Tagesverlauf, um ein Abtauen bzw. Auftauen zu generieren. Wesentlich hierbei ist, der zusätzliche energetische Input bzw. Energieeintrag von der Lüftungsanlage in den Wärmequellen-Wärmetauscher/Erdkollektor bzw. in die Erdsonde.

Die erfindungsgemäßen "Energieverluste" bzw. der energetische "Nachteil" für die Lüftungsanlage stehen im Widerspruch zu den bisherigen Entwicklungen im energetischen Gebäudemanagement und sind im Vergleich zum zuvor genannten Vorteil bzw. "Gewinn" für den Wärmequellenkreislauf und auch für das Gesamtsystem bzw. das Energiemanagement des Gebäudes von untergeordneter Bedeutung. Vielmehr ist gemäß der Erfindung hierdurch sogar eine erhebliche Reduktion der Dimensionierung und somit der Kosten des Wärmequellen-Wärmetauschers/Erdkollektors bzw. der Erdsonde u.a. für Verlegung bzw. Bohrung und Herstellung realisierbar.

### Ausführungsbeispiel

Ein bevorzugtes Ausführungsbeispiel der Erfindung ist in der Zeichnung dargestellt und wird anhand der Figuren nachfolgend näher erläutert.

Im Einzelnen zeigt:
- Figur 1: ein schematisches Blockschaltbild einer ersten Wärmepumpenheizvorrichtung gemäß der Erfindung,
- Figur 2: ein schematisches Blockschaltbild einer zweiten Wärmepumpenheizvorrichtung gemäß der Erfindung,
- Figur 3: ein schematisches Blockschaltbild einer dritten Wärmepumpenheizvorrichtung gemäß der Erfindung,
- Figur 4: ein schematisches Blockschaltbild einer vierten Wärmepumpenheizvorrichtung gemäß der Erfindung,
- Figur 5: ein schematisches Blockschaltbild einer fünften Wärmepumpenheizvorrichtung gemäß der Erfindung und
- Figur 6: ein schematisches Blockschaltbild einer sechsten Wärmepumpenheizvorrichtung gemäß der Erfindung.

Die in den Figuren sind unterschiedliche Ausführungsbeispiele aufgeführt, die sich im Wesentlichen auf unterschiedliche Anordnungen bzw. Integrations- und Verschaltungsmöglichkeiten von einem ersten Luft-Wärmetauscher 1 und einen zweiten Luft-Wärmetauscher 2 in einen von einer Pumpe 15 angetriebenen Wärmepumpenkreislauf 3 gemäß der Erfindung beziehen. Hierbei bezeichnen gleiche Bezugszeichen im Wesentlichen gleiche bzw. vergleichbare Komponenten bzw. Merkmale.

Der Wärmepumpenkreislauf 3 umfasst zumindest eine Wärmepumpe 4 und einen Wärmequellen-Wärmetauscher 5, der vorzugsweise als eine Erdsonde 5 bzw. ein Erdkollektor 5, als sog. Eisspeicher 5, als sog. Saisonalspeicher 5 oder dergleichen ausgebildet ist. Vorzugsweise ist eine Stromversorgung 14 und/oder Steuerung 14 bzw. Platine 14 der Wärmepumpe 4 zugeordnet, was nicht in allen Figuren schematisch dargestellt ist.

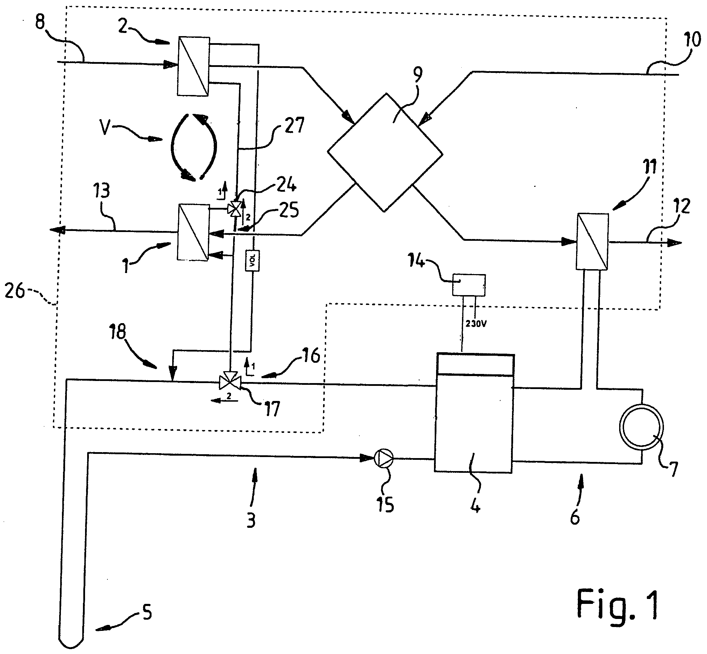

Die Wärmepumpe 4 ist in bekannter Weise aufgebaut und umfasst im Wesentlichen (nicht näher dargestellt) einen geschlossenen Kreislauf v.a. mit einem Kondensator, einem Verdampfer und einem Expansionsventil sowie einer Pumpe, wobei der Verdampfer als Wärmetauscher eine Komponente des Wärmepumpenkreislaufs 3 ist, d.h. in diesem integriert/eingebunden und somit einerseits von einem Wärmepumpenfluid und andererseits von einem Wärmequellenfluid durchflossen ist. Der Kondensator ist entsprechend in bekannter Weise als Wärmetauscher in einen Heizkreislauf 6 eingebunden bzw. integriert. Der Heizkreislauf 6 umfasst zudem einen Warmwasserboiler 7 bzw. Heizkörper 7, insb. sog. Flächenheizkörper 7, oder dergleichen und einen optional vorzusehenden dritten Luft-Wärmetauscher 11 (vgl. Varianten gemäß Figur 1, 2 oder 6).

Der zweite Luft-Wärmetauscher 2 ist als sog. Außenluft-Wärmetauscher 2 ausgebildet und von einem ersten Luftstrom durchströmt, der als sog. Außenluft 8 bezeichnet wird, d.h. von außen eingesaugt bzw. der atmosphärischen Luft entstammt. Dieser Luft-Wärmetauscher 2 ist in Strömungsrichtung der Außenluft 8 vor einem sog. Kreuzwärmetauscher 9 bzw. Plattenwärmetauscher 9 angeordnet. Der Kreuzwärmetauscher 9 ist zur Wärmerückgewinnung ausgebildet, wobei dieser zudem von einem zweiten, wärmeren, vom Gebäudeinneren bzw. von innen stammenden/eingesaugten Luftstrom durchströmt wird, der als sog. Innenluft 10 bezeichnet wird.

Der erste Luftstrom wird nach dem Kreuzwärmetauscher 9 beim in das Gebäude einströmen auch als sog. Zuluft 12 bezeichnet, wobei dieser vor dem Einströmen in einen Gebäudeinnenraum optional den dritten Luft-Wärmetauscher 11 durchströmt (siehe oben). Der zweite Luftstrom wird nach dem Kreuzwärmetauscher 9 beim aus dem Gebäude ausströmen auch als sog. Fortluft 13 bezeichnet, wobei dieser vor dem Ausströmen aus dem Gebäude bzw. in die Atmosphäre den ersten Luft-Wärmetauscher 1 durchströmt (siehe oben).

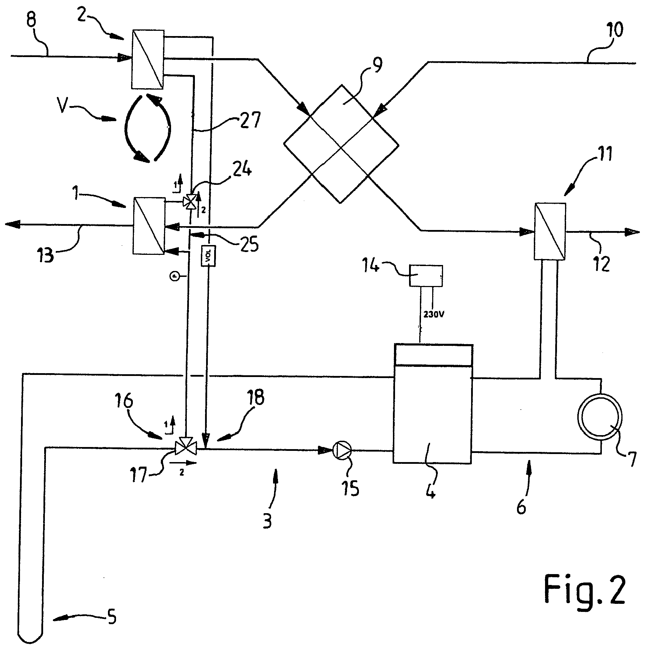

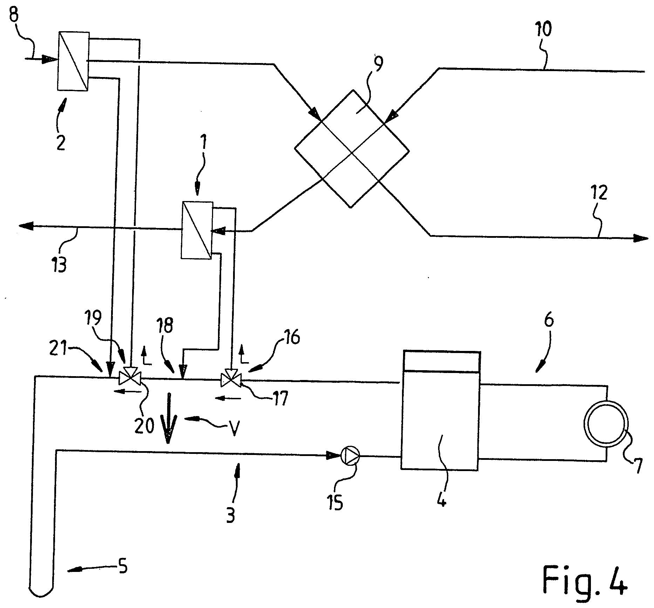

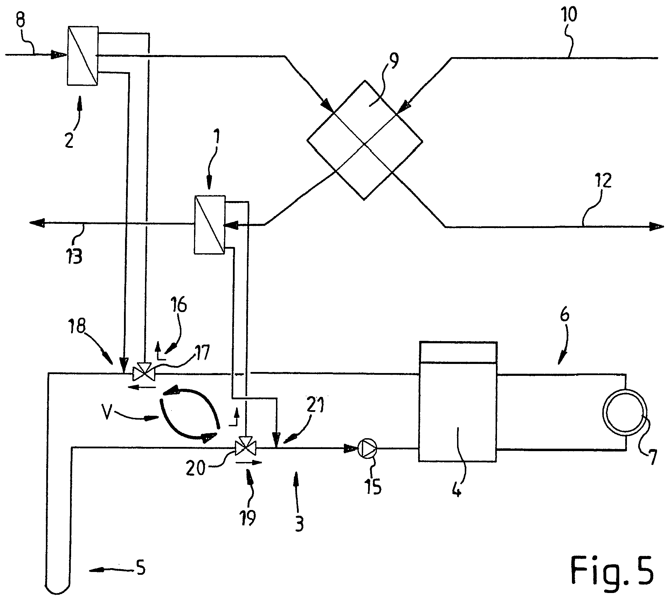

Bei der bevorzugten Variante der Erfindung gemäß Figur 1 sind die beiden Luft-Wärmetauscher 1, 2 über eine erste Abzweigstelle 16 und/oder ein Stellglied 17 bzw. Ventil 17 und einer zweiten Abzweigstelle 18 in den Wärmepumpenkreislauf 3 eingebunden bzw. integriert. Entsprechend ist eine Parallelverschaltung der beiden Luft-Wärmetauscher 1, 2 in Bezug zum Erd-Wärmetauscher 5 bzw. Wärmepumpe 4 realisiert. Hierdurch kann mittels dem Stellglied 17 und/oder der Dimensionierung, insb. der Querschnitte, der Abzweigstellen 16, 18 in vorteilhafter Weise ein Teilstrom bzw. der Anteil am Hauptkreislaufs eingestellt/geregelt werden. Eine gestrichelt umrandete Line gemäß Figur 1 soll verdeutlichen, dass die hierin enthaltenen Komponenten gemeinsam als eine Baueinheit 26 bzw. ein separat handhabbares Lüftungsgerät 26 verwirklicht werden kann. Dies kann entsprechend auch für die anderen Varianten gemäß der Figuren 2 bis 6 realisiert werden.

Die Varianten gemäß den Figuren 1 oder 2 weisen jeweils eine Verbindungsleitung 27 zwischen den beiden Luft-Wärmetauschern 1, 2 auf. Hiermit ist eine zweistufige Temperaturänderung des Wärmequellenfluids realisierbar. Vorzugsweise entnimmt der Fortluft-Wärmetauscher 1 Energie/Wärme dem ausströmenden, relativ warmen Luftstrom und erwärmt hiermit den in das Gebäude einströmenden Luftstrom bzw. die Außenluft 8, um bei besonders tiefen Außentemperaturen eine Eisbildung im Kreuz-Wärmetauscher 9 zu vermindern bzw. vermeiden.

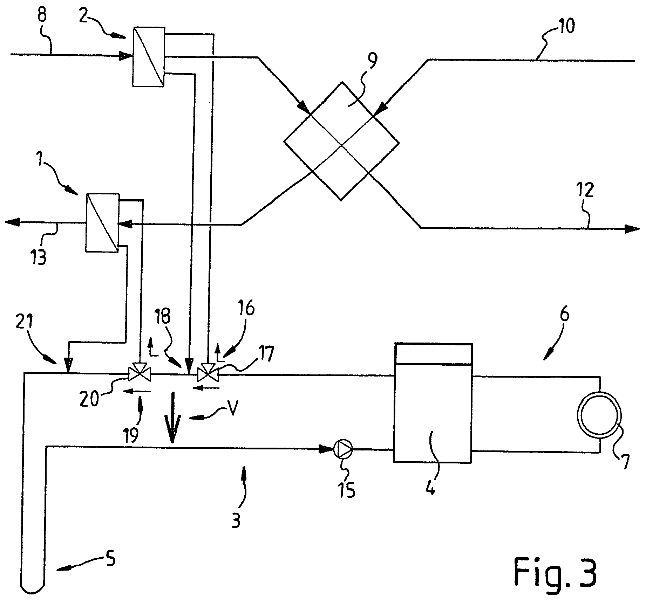

Es können gemäß den anderen Varianten der Erfindung gemäß den Figuren 3, 4, 5 auch Systeme mit zwei separaten Einbindungen der beiden Luft-Wärmetauscher 1, 2 realisiert werden. Hierbei sind dann weiteren Abzweigstellen 19, 21 und/oder ein weiteres Stellglied 20 bzw. Ventil 20 vorgesehen.

Darüber hinaus ist von Vorteil, mit Hilfe eines weiteren Stellglieds 24 bzw. Ventils 24 bzw. Abzweigstelle 24 eine Überbrückung 25 bzw. ein Bypass 25 für den ersten im Teilkreis angeordneten Luft-Wärmetauscher 1, 2 (vgl. Figur 1, 2) zu realisieren. Hiermit kann der jeweilige Luft-Wärmetauscher 1, 2 separat zugeschaltet bzw. ausgekoppelt werden, wobei das Ventil 24 auch am Input bzw. vor dem jeweiligen Luft-Wärmetauscher 1, 2 angeordnet werden kann. Diese Zu-/Abschaltbarkeit des jeweiligen Luft-Wärmetauschers 1, 2 erhöht nochmals die Flexibilität des Systems.

Das in den Figuren dargestellte V mit dem oder den zugeordneten Pfeilen stellt jeweils eine weitere, ansonsten nicht näher dargestellte Variante V der jeweiligen Figur dar, bei dem die entspr. Komponenten, z.B. Luft-Wärmetauscher 1, 2 gemäß Figur 1 entsprechend bzgl. ihrem Platz im Teilkreislauf bzw. System getauscht oder die jeweiligen Einbindungen bzw. Abzweigstellen entsprechend dem Pfeil versetzt werden könnten.

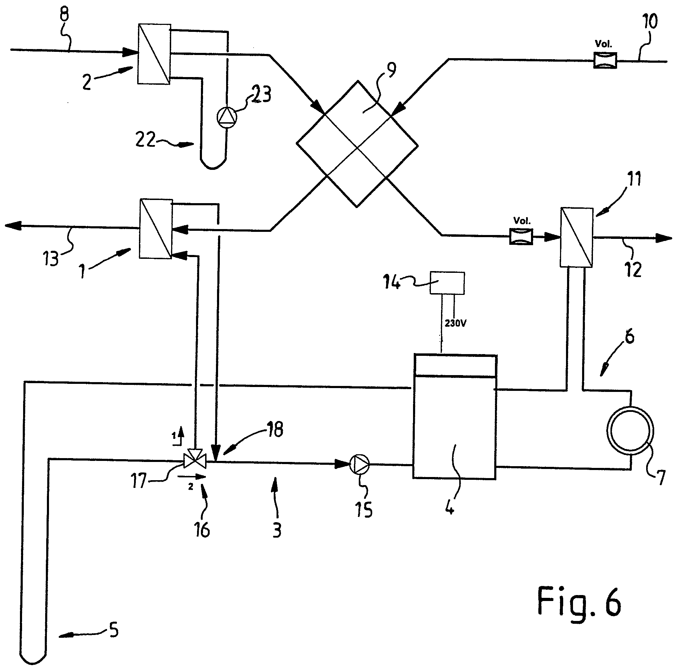

Gemäß der Variante der Figur 6 kann auch der Außenluft-Wärmetauscher 2 mit einem separaten bzw. zweiten Erd-Wärmetauscher 22 mit separater Pumpe 23 betreiben werden.

Grundsätzlich können diverse Sensoren, wie Temperatursensoren und/oder Durchflusssensoren oder dergleichen im System von großem Vorteil für die Steuerung/Regelung und die unterschiedlichste Betriebsweisen sein.

### Bezugszeichenliste

- 1: Luft-Wärmetauscher
- 2: Luft-Wärmetauscher
- 3: Wärmepumpen-Kreislauf
- 4: Wärmepumpe
- 5: Erd-Wärmetauscher
- 6: Heizkreislauf
- 7: Boiler/Heizkörper
- 8: Außenluft
- 9: Kreuz-Wärmetauscher
- 10: Innenluft
- 11: Luft-Wärmetauscher
- 12: Zuluft
- 13: Fortluft
- 14: Steuerung
- 15: Pumpe
- 16: Abzweigstelle
- 17: Ventil
- 18: Abzweigstelle
- 19: Abzweigstelle
- 20: Ventil
- 21: Abzweigstelle
- 22: Erd-Wärmetauscher
- 23: Pumpe
- 24: Ventil
- 25: Bypass
- 26: Baueinheit
- 27: Verbindung

- V: Variante

## Patentansprüche

1. Wärmepumpenheizvorrichtung zum Heizen eines Gebäudes und/oder eines Brauchwasserspeichers (7) mit einer Wärmepumpe (4), wobei ein Wärmequellenkreislauf (3) wenigstens die Wärmepumpe (4) und einen Wärmequellen-Wärmetauscher (5) zum Nutzen von Wärmeenergie einer Wärmequelle, insbesondere eines Erdkörpers oder dergleichen, sowie eine Pumpe (15) zum Pumpen und/oder Umwälzen eines Wärmequellenfluids, insbesondere einer Sole, umfasst, wobei ein Heizkreislauf (6) wenigstens die Wärmepumpe (4) und einen von einem Heizfluid, insbesondere einem Heizwasser, durchströmbaren Heizkörper (7), insbesondere Flächenheizkörper und/oder Radiator, und/oder den Brauchwasserspeicher (7) sowie eine Heizpumpe zum Pumpen und/oder Umwälzen des Heizfluids umfasst, wobei eine Lüftungsanlage (26) wenigstens eine Wärmetauschereinheit (9 zur Wärmeübertragung zwischen einem aus dem Gebäude ausströmenden, ersten Luftstrom (10, 13) und einem in das Gebäude einströmenden, zweiten Luftstrom (8, 12) aufweist, wobei der Wärmequellenkreislauf (3) wenigstens einen ersten, von dem Wärmequellenfluid durchströmbaren Luft-Wärmetauscher (1) zur Wärmeübertragung zwischen einem der Luftströme (8, 10, 12, 13) der Lüftungsanlage (26) und dem Wärmequellenfluid aufweist, **dadurch gekennzeichnet, dass** der Wärmequellenkreislauf (3) wenigstens einen zweiten, von dem Wärmequellenfluid durchströmbaren Luft-Wärmetauscher (2) zur Wärmeübertragung zwischen einem der Luftströme (8, 10, 12, 13) der Lüftungsanlage (26) und dem Wärmequellenfluid aufweist.

2. Wärmepumpenheizvorrichtung nach Anspruch 1, **dadurch gekennzeichnet, dass** der erste Luft-Wärmetauscher (1) als Fortluft-Wärmetauscher (1) ausgebildet ist, wobei der Fortluft-Wärmetauscher (1) in Strömungsrichtung des aus dem Gebäude ausströmenden, ersten Luftstroms (10, 13) betrachtet nach/hinter der Wärmetauschereinheit (9) angeordnet ist, und/oder dass der zweite Luft-Wärmetauscher (2) als Außenluft-Wärmetauscher (2) ausgebildet ist, wobei der Außenluft-Wärmetauscher (2) in Strömungsrichtung des in das Gebäude einströmenden, zweiten Luftstroms (8, 12) betrachtet vor der Wärmetauschereinheit (9) angeordnet ist.

3. Wärmepumpenheizvorrichtung nach einem der vorgenannten Ansprüche, **dadurch gekennzeichnet, dass** der Wärmequellenkreislauf (3) wenigstens ein von dem Wärmequellenfluid durchströmbares Verbindungselement (27) zum Verbinden des ersten Luft-Wärmetauschers (1) mit dem zweiten Luft-Wärmetauscher (2) umfasst.

4. Wärmepumpenheizvorrichtung nach einem der vorgenannten Ansprüche, **dadurch gekennzeichnet, dass** im Wärmequellenkreislauf (3) der erste Luft-Wärmetauscher (1) in Strömungsrichtung des Wärmequellenfluids betrachtet vor dem zweiten Luft-Wärmetauscher (2) angeordnet ist.

5. Wärmepumpenheizvorrichtung nach einem der vorgenannten Ansprüche, **dadurch gekennzeichnet, dass** im Wärmequellenkreislauf (3) der erste Luft-Wärmetauscher (1) und/oder der zweite Luft-Wärmetauscher (2) in Strömungsrichtung des Wärmequellenfluids betrachtet nach/hinter der Wärmepumpe (4) und/oder einer Ausströmöffnung der Wärmepumpe (4) angeordnet ist/sind.

6. Wärmepumpenheizvorrichtung nach einem der vorgenannten Ansprüche, **dadurch gekennzeichnet, dass** im Wärmequellenkreislauf (3) der erste Luft-Wärmetauscher (1) und/oder der zweite Luft-Wärmetauscher (2) in Strömungsrichtung des Wärmequellenfluids betrachtet vor dem Wärmequellen-Wärmetauscher (5) angeordnet ist/sind.

7. Wärmepumpenheizvorrichtung nach einem der vorgenannten Ansprüche, **dadurch gekennzeichnet, dass** der Wärmequellenkreislauf (3) wenigstens ein Stellglied (17, 20) zum Kontrollieren des Wärmequellenfluids umfasst.

8. Wärmepumpenheizvorrichtung nach einem der vorgenannten Ansprüche, **dadurch gekennzeichnet, dass** das Stellglied (17, 20) derart ausgebildet ist, dass der erste Luft-Wärmetauscher (1) und/oder zweite Luft-Wärmetauscher (2) von einem Teilstrom des Wärmequellenfluids strömbar ist/sind und/oder dass ein Teil, insbesondere der nicht durch den ersten und/oder zweiten Luft-Wärmetauscher (1, 2) strömende Teilstrom nach Durchströmen der Wärmepumpe (4), unmittelbar zum Wärmequellenwärmetauscher (5) strömt.

9. Wärmepumpenheizvorrichtung nach einem der vorgenannten Ansprüche, **dadurch gekennzeichnet, dass** der Heizkreislauf (6) wenigstens einen dritten Luft-Wärmetauscher (11) zur Wärmeübertragung zwischen dem in das Gebäude einströmenden, zweiten Luftstrom (12, 13) der Lüftungsanlage (26) und dem Heizfluid umfasst.

10. Gebäude mit einer Wärmepumpenheizvorrichtung nach einem der vorgenannten Ansprüche.
